# EUROPEAN PATENT APPLICATION

(11) **EP 2 942 747 A1**
(43) Date of publication of application: **11.11.2015**
(21) Application number: 14735377.5
(22) Date of filing: 06.01.2014
(51) Int. Cl.: G06Q 20/32, G06Q 20/14, G06Q 40/02

(54) **CREDIT CARD SELF-PAYING SYSTEM USING MOBILE COMMUNICATIONS TERMINAL AND METHOD THEREFOR**

(30) Priority: 07.01.2013 KR 20130001619
(71) Applicant: Hankooknfc Co., Ltd., Seocho-gu Seoul 137-819 (KR)
(72) Inventor: SONG, Sung-Un, Seoul 153-823 (KR)
(74) Representative: Verscht, Thomas Kurt Albert
(86) International application number: PCT/KR2014/000097
(87) International publication number: WO 2014/107067

(57) **Abstract**

The present invention relates to a credit card paying system and method, and, more particularly, to a credit card self-paying method which comprises the steps of: firstly designating a mobile communications terminal capable of reading the information of a credit card from the magnetic and IC chip thereof for a virtual credit card paying terminal; and directly contacting a credit card with the mobile communications terminal designated as the virtual credit card paying terminal in order to pay a bill for an online or offline purchase made by the user of the mobile communications terminal, thereby preventing the credit card information of the user from being undesirably exposed to a third party because the payment for a purchase can be made by directly contacting the credit card with the mobile communications terminal.

## Description

### Technical Field

The present invention generally relates to a card payment system and method and, more particularly, to a self-card payment system and method using a mobile communication terminal, which designate a mobile communication terminal capable of reading card information from the magnetic and IC chips of a card as a virtual card payment terminal only once per payment, and allow the user of the mobile communication terminal to pay a purchase amount consumed in online and offline environments by personally touching a card to the mobile communication terminal designated as the virtual card payment terminal.

### Background Art

Generally, as methods of paying for goods such as products or food, cash payment methods for paying in cash and card payment methods for paying with a credit card, a debit card, or a cash card (T-money card) have been chiefly used.

In the past, cash payment methods were widely used, but the use of cards has rapidly increased owing to a variety of conveniences in Internet banking, Internet payments, and offline payments.

Generally, a credit card payment system includes an affiliated store terminal unit (not shown) for acquiring the card information of a credit card and transmitting the card information together with payment amount information, and a financial system (not shown) for receiving the payment amount information and the card information and processing the authorization of a transaction with the corresponding credit card company.

In an offline environment, the affiliated store terminal unit is the card payment terminal (or variously referred to as a "credit card reader" or the like) of an affiliated store, and the financial system may be any of a Value Added Network (VAN) company server, a plurality of card company servers, bank servers, etc. In this case, the affiliated store terminal unit and the VAN company server are typically connected to each other through the private line of a Public Switched Telephone Network (PSTN). However, recently, some affiliated store terminal units are even equipped with a function of accessing the Internet.

Further, in an online environment, the affiliated store terminal unit may be a payment module provided by a corresponding online retail shopping site, and the financial system may be any of a Payment Gateway (PG) company server, a plurality of card company servers, and a plurality of bank servers. In this case, the affiliated store terminal unit and the PG company server may be typically connected to each other over the Internet.

Typically, the affiliated store terminal unit transmits card information and payment amount information acquired from a purchaser to a financial system, and requests the authorization of a card transaction from the financial system. The financial system, having received such an authorization request, determines the validity or invalidity of the card, the credit status of the card holder, the credit limit of the credit card that is desired to be used, etc., and provides the results of authorization to the affiliated store terminal unit.

However, such an existing card payment method is problematic in that, when a user orders food for delivery over the phone or purchases a product online via an Internet site, card information must be provided to a seller over the phone, must be entered into the payment module of the website, or must be previously registered in a website provision server, so that card information may be easily leaked to a third party such as a hacker or a seller, and thus the risk of financial accidents caused by the leakage of card information is always present.

Due thereto, a problem arises in that, when ordering food for delivery over the phone, users intend to pay in cash most of the time, rather than using a card, thus making it impossible to order something for delivery when the user does not have cash.

In order to solve these problems, wireless card payment terminals have recently been popularized and used, but the burden on sellers has increased due to the prices and usage fees of the terminals.

### Disclosure

### Technical Problem

An object of the present invention is to provide a self-card payment system and method using a mobile communication terminal, which designate a mobile communication terminal capable of reading card information from the magnetic and IC chips of a card as a virtual card payment terminal only once per payment, and allow the user of the mobile communication terminal to pay a purchase amount incurred in online and offline environments by personally touching a card to the mobile communication terminal designated as the virtual card payment terminal.

### Technical Solution

In order to accomplish the above object, a self-card payment system using a mobile communication terminal according to a first embodiment of the present invention includes an affiliated store card payment terminal for receiving mobile communication terminal identification information of a user who will perform card payment, transmitting a self-card payment request signal that requests self-card payment for the mobile communication terminal, with the mobile communication terminal identification information included in the self-card payment request signal, and if a payment request signal is received in response to the self-payment request signal, performing payment via a card payment financial company based on card information included in the payment request signal; a mobile communication terminal for, when a bill containing virtual card terminal identification information is received, displaying the bill, and thereafter reading the card information from a card and transmitting a payment request signal including the card information and the bill; and a virtual affiliated store management server unit for, when the self-card payment request signal is received from the affiliated store card payment terminal, transmitting a bill containing the virtual card terminal identification information to the mobile communication terminal corresponding to the mobile communication terminal identification information included in the self-card payment request signal, and for, when the payment request signal is received from the mobile communication terminal, providing the payment request signal to the affiliated store card payment terminal corresponding to the virtual card terminal identification information.

The mobile communication terminal may include a communication unit for accessing a wired/wireless Internet and a mobile communication network and performing data communication with the virtual affiliated store management server unit; a card reader unit for reading card information from a card located at a predetermined distance and outputting the card information; and a control unit for, when the bill is received through the communication unit, reading card information of a card to be used for payment through the card reader unit, generating the payment request signal, and transmitting the payment request signal to the virtual affiliated store management server unit through the communication unit.

The control unit may include an authentication unit for, when the bill is received, receiving one or more of an ID and a password from a user, comparing one of the ID and the password with one of a prestored ID and a prestored password corresponding to the one of the received ID and password, and checking whether they are identical to each other; a payment information acquisition unit for, when authentication by the authentication unit succeeds, receiving the bill, and detecting and displaying payment amount information and affiliated store information contained in the bill; a card information acquisition unit for, after the bill is displayed, requesting movement of the card to be used for payment for the bill in proximity to the card reader unit, and reading and acquiring card information from the proximate card; and a payment unit for generating a payment request signal including the card information and the bill, and transmitting payment request signal to the virtual affiliated store management server unit.

The control unit may further include a card inquiry unit for inquiring of the virtual affiliated store management server unit about the card corresponding to the card information when the card information is acquired through the card information acquisition unit, the payment unit may be configured to, when there is no abnormality in a result of inquiry by the card inquiry unit, generate the payment request signal and transmit the payment request signal to the virtual affiliated store management server unit.

The affiliated store card payment terminal may include an input unit having a plurality of number keys and a self-card payment function key; a communication unit for accessing a typical Public Switched Telephone Network (PSTN) to perform data communication with financial company servers and perform data communication with the virtual affiliated store management server unit; a storage unit for storing a virtual card-payment affiliated store program; and a control unit for, after the self-card payment function key has been input, receiving mobile communication terminal identification information of the user who will perform card payment in compliance with the virtual card payment affiliated store program, through the input unit, transmitting the self-card payment request signal that requests self-card payment for the mobile communication terminal to the virtual affiliated store management server unit, with the mobile communication terminal identification information included in the self-card payment request signal, and if a payment request signal is received from the virtual affiliated store management server unit in response to the self-payment request signal, performing payment via the card payment financial company based on the card information included in the payment request signal.

The affiliated store card payment terminal may further include a second communication unit connected to an affiliated store computer terminal to perform data communication therewith, and the virtual card payment affiliated store program is installed after being downloaded from the virtual affiliated store management server unit through the affiliated store computer terminal connected via the second communication unit when the affiliated store is registered as an affiliated store for providing a self-card payment service through the virtual affiliated store management server unit.

The control unit may include a virtual payment confirmation processing unit for, after the self-card payment function key has been input, receiving, through the input unit, mobile communication terminal identification information of the user who will perform card payment in compliance with the virtual card payment affiliated store program, and transmitting the self-card payment request signal that requests self-card payment for the mobile communication terminal to the virtual affiliated store management server unit, with the mobile communication terminal identification information included in the self-card payment request signal; a card information acquisition unit for receiving the payment request signal through the communication unit and detecting and acquiring the card information included in the payment request signal; and a card payment module for performing payment through the card payment financial company that authorizes payment with the card corresponding to the acquired card information.

The control unit may further include a virtual card terminal identification information generation unit for, when an affiliated store for providing a self-card payment service is registered through the virtual affiliated store management server unit, being assigned a virtual card terminal identification information band falling within a predetermined range from the virtual affiliated store management server unit, and for, when a self-card payment request is generated due to clicking of the self-card payment function key, generating any virtual card terminal identification information in the virtual card terminal identification information band, wherein the virtual payment confirmation processing unit transmits the generated virtual card terminal identification information to the virtual affiliated store management server unit, with the virtual card terminal identification information included in the self-payment request signal.

The virtual affiliated store management server unit may include an affiliated store database (DB) for storing affiliated store information about companies, which provide the self-card payment service and in which authorization of card affiliation has been completed; a user DB for storing user information including mobile communication terminal identification information of users who desire to use the self-card payment service; a web server for providing a registration unit for registration of affiliated stores to provide the self-card payment service and personal members via a webpage, storing affiliated store information input through the registration unit in the affiliated store DB to register the corresponding stores as affiliated stores, and receiving the user information through the registration unit and storing the user information in the user DB to register the corresponding users as personal members; and a virtual affiliated store management server for, when a self-card payment request signal is received from an affiliated store card payment terminal of an affiliated store registered as a member, transmitting a bill containing virtual card terminal identification information to a mobile communication terminal corresponding to mobile communication terminal identification information included in the self-card payment request signal, with respect to the member subscribed to the self-card payment service, and for, when the payment request signal is received from the mobile communication terminal, providing the payment request signal to the affiliated store card payment terminal corresponding to the virtual card terminal identification information.

The virtual card terminal identification information may be generated by the virtual affiliated store management server unit and is allocated to the mobile communication terminal, the virtual card terminal identification information being managed so that the virtual card terminal identification information is mapped to card terminal identification information of the affiliated store card payment terminal.

The virtual card terminal identification information may be valid for one-time reading of the card information in the mobile communication terminal, and may then be deleted after the one-time reading of the card information.

The virtual affiliated store management server unit may further include an application DB for storing virtual card payment affiliated store programs based on manufacturers of affiliated store card payment terminals and device types, and the web server is configured to, when affiliated store members to provide the self-card payment service are registered, receive information about manufacturers and device types of affiliated store card payment terminals, provide installation programs and virtual card payment programs corresponding to the manufacturers and device types to corresponding affiliated store computer terminals, install the corresponding installation programs in the affiliated store computer terminals, and install the corresponding virtual card payment programs in the affiliated store card payment terminals via the installation programs.

In order to accomplish the above object, a self-card payment system using a mobile communication terminal according to a second embodiment of the present invention includes an affiliated store card payment terminal for receiving mobile communication terminal identification information of a user who will perform card payment, transmitting a self-card payment request signal that requests self-card payment for the mobile communication terminal, with the mobile communication terminal identification information included in the self-card payment request signal, and receiving and displaying transaction record data in response to the self-card payment request signal; a mobile communication terminal for, when a bill containing virtual card terminal identification information is received, displaying the bill, and thereafter reading the card information from a card and transmitting a payment request signal including the card information and the bill; and a virtual affiliated store management server unit for, when the self-card payment request signal is received from the affiliated store card payment terminal, transmitting a bill containing the virtual card terminal identification information to the mobile communication terminal corresponding to the mobile communication terminal identification information included in the self-card payment request signal, and for, when the payment request signal is received from the mobile communication terminal, performing payment through a card payment financial company based on the card information included in the payment request signal, and providing transaction record data based on completion of payment authorization to the affiliated store card payment terminal.

In order to accomplish the above object, a self-card payment method using a mobile communication terminal according to the present invention includes a self-card payment request procedure of, when a self-card payment service is requested as input of mobile communication terminal identification information, transmitting, by an affiliated store card payment terminal, a self-card payment request signal including the mobile communication terminal identification information and payment amount information to a virtual affiliated store management server unit, and then requesting self-card payment for the mobile communication terminal; a card payment request procedure of, when the self-card payment request signal is received from the affiliated store card payment terminal, transmitting, by the virtual affiliated store management server unit, a bill containing virtual card terminal identification information to a mobile communication terminal corresponding to the mobile communication terminal identification information included in the self-card payment request signal; a virtual payment request procedure of, after the bill containing the virtual card terminal identification information has been displayed upon receiving the bill, reading, by the mobile communication terminal, card information from a card and transmitting a payment request signal including the card information and the bill; a payment request procedure of transmitting, by the virtual affiliated store management server unit, the payment request signal to the affiliated store card payment terminal corresponding to the virtual card terminal identification information contained in the bill when the payment request signal is received; and a payment procedure of performing, by the affiliated store card payment terminal, payment via a card payment financial company based on card information included in the payment request signal when the payment request signal is received.

The self-card payment request procedure may include a virtual card terminal identification information generation step of generating, by the affiliated store card payment terminal, any one piece of virtual card terminal identification information in a virtual card terminal identification information band falling within a predetermined range previously assigned by the virtual affiliated store management server unit for the mobile communication terminal identification information; and a self-card payment request step of transmitting a self-card payment request signal including a bill to the virtual affiliated store management server unit, wherein the bill has the generated virtual card terminal identification information, the mobile communication terminal identification information, and payment amount information.

The card payment request procedure may include a virtual card terminal identification information allocation step of, when the self-card payment request signal is received, generating and allocating, by the virtual affiliated store management server unit, virtual card terminal identification information to a mobile communication terminal corresponding to the mobile communication terminal identification information included in the self-card payment request signal, and storing the virtual card terminal identification information so that the virtual card terminal identification information is mapped to affiliated store information for the affiliated store card payment terminal; and a card payment request step of transmitting the bill containing the virtual card terminal identification information to the mobile communication terminal.

The virtual payment request procedure may include an authentication step of, when the bill is received, receiving one or more of an ID and a password from a user, comparing one of the ID and the password with one of a prestored ID and a prestored password corresponding to the one of the received ID and password, and checking whether they are identical to each other; a payment information acquisition step of, when authentication succeeds, receiving the bill, and detecting and displaying payment amount information and affiliated store information contained in the bill; a card information acquisition step of, after the bill has been displayed, detecting and storing virtual card terminal identification information contained in the bill, requesting movement of a card to be used for payment for the bill in proximity to a card reader unit, based on the virtual card terminal identification information, and reading and acquiring card information from the proximate card; and a virtual payment request step of generating a payment request signal including the card information and the bill, and transmitting the payment request signal to the virtual affiliated store management server unit.

The virtual payment request procedure may further include a card inquiry step of, when the card information is acquired by the card information acquisition unit, inquiring of the virtual affiliated store management server unit about the card corresponding to the card information, and the virtual payment request procedure is configured such that, when there is no abnormality in a result of inquiry at the virtual payment request step, the payment request signal is transmitted to the virtual affiliated store management server unit.

The virtual payment request procedure may further include a virtual card terminal identification deletion step of, after the card information acquisition step, deleting the stored virtual card terminal identification information.

The self-card payment method may further include a member registration procedure including an affiliated store registration step of registering affiliated store members to provide the self-card payment service, and a personal member registration step of registering personal members to use the self-card payment service, wherein the self-card payment request procedure is performed on a mobile communication terminal of a member registered as a personal member in an affiliated store registered as an affiliated store member via the member registration procedure.

The affiliated store registration step may include a program installation step of installing, by the affiliated store card payment terminal, a virtual card payment affiliated store program, after being downloaded from the virtual affiliated store management server unit; and an affiliated store information input step of accessing a web server of the virtual affiliated store management server unit that provides an affiliated store registration unit through an affiliated store computer terminal, inputting affiliated store information including the affiliated store card payment terminal identification information through the affiliated store registration unit, and then registering the affiliated store.

The program installation step may include an affiliated store card payment terminal information input step of, inputting, by the affiliated store computer terminal, information about a manufacture and a device type of the affiliated store card payment terminal provided by the web server; a download step of downloading, by the affiliated store computer terminal, an installation program and a virtual card payment affiliated store program corresponding to the affiliated store card payment terminal from the web server; an installation program installation step of installing, by the affiliated store computer terminal, the installation program; an affiliated card payment affiliated store program transmission step of transmitting, by the affiliated store computer terminal, the virtual card payment affiliated store program to the affiliated store card payment terminal via the installation program; and a virtual card payment affiliated store program installation step of installing, by the affiliated store card payment terminal, the virtual card payment affiliated store program downloaded via the installation program.

### Advantageous Effects

The present invention is advantageous in that a mobile communication terminal is used as a card payment terminal, so that the user of the mobile communication terminal may personally perform card payment, and thus, from the standpoint of the user, the reliability of card use may be improved.

Further, since the present invention does not require the dictation of card information over the phone, registration of the card information on any Internet website, or entry of the card information into an online payment module, the user never has to worry about the leakage of his or her card information to a third party.

Furthermore, the present invention is advantageous in that, when goods such as food are ordered for delivery, a seller does not need to purchase a separate wireless card payment terminal, so that the seller can save the fees required to purchase and use a wireless card payment terminal. Owing to this, the economic burden on the seller may be reduced. Further, even a purchaser who orders goods for delivery may pay for the goods with a card via his or her mobile communication terminal after verifying the delivery of the goods, thus obtaining the advantage of requesting the delivery of goods without having cash.

### Description of Drawings

FIG. 1 is a diagram showing the configuration of a self-card payment system using a mobile communication terminal according to the present invention;
FIG. 2 is a diagram showing the configuration of the card payment terminal of a self-card payment system using a mobile communication terminal according to an embodiment of the present invention;
FIG. 3 is a diagram showing the configuration of the card payment terminal of the self-card payment system using a mobile communication terminal according to a first embodiment of the present invention;
FIG. 4 is a diagram showing the configuration of the virtual affiliated store management server unit of the self-card payment system using a mobile communication terminal according to the present invention;
FIG. 5 is a diagram showing the configuration of the affiliated store management server of an affiliated store management server unit according to the present invention;
FIG. 6 is a flowchart showing a method for allowing a user to register as a member for self-card payment using a mobile communication terminal according to the present invention;
FIG. 7 is a flowchart showing a method for allowing an affiliated store to register as a member for self-card payment using a mobile communication terminal according to the present invention;
FIG. 8 is a flowchart showing a first embodiment of a self-card payment method using a mobile communication terminal according to the present invention; and
FIG. 9 is a flowchart showing a second embodiment of a self-card payment method using a mobile communication terminal according to the present invention.

### Best Mode

Hereinafter, the configuration of a self-card payment system using a mobile communication terminal and a self-card payment method according to the present invention will be described in detail with reverence to the attached drawings.

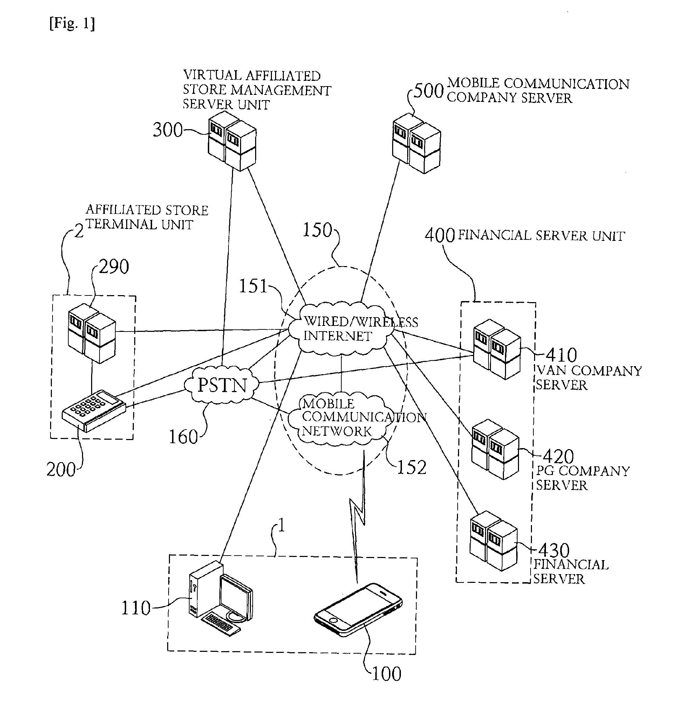

FIG. 1 is a diagram showing the configuration of a self-card payment system using a mobile communication terminal according to the present invention.

Referring to FIG. 1, the self-card payment system using a mobile communication terminal according to the present invention includes a user terminal unit 1, an affiliated store terminal unit 2, and a virtual affiliated store management server unit 300.

The user terminal unit 1 includes a user computer terminal 110, which is connected to the wired/wireless Internet 151 of a wired/wireless data communication network 150 and is configured to perform data communication with other devices connected to the wired/wireless Internet 151, and a mobile communication terminal 100, which is connected in a wireless manner to the mobile communication network 152 of the wired/wireless data communication network 150 and is configured to perform data communication with other devices and systems connected to the mobile communication network 152 and the wired/wireless Internet 151. The mobile communication network 152 may include one or more of a third-generation (3G) data network and a Long Term Evolution (LTE) network.

The mobile communication terminal 100 is a mobile communication terminal called a mobile phone, a cellular phone, a second generation (2G) phone, a third generation (3G) phone, a fourth generation (4G) phone, or a smart phone. Such a mobile communication terminal 100 may be a terminal having a short-range wireless communication (Near Field Communication: NFC) function of reading card information from the IC chip of a credit card, a debit card, a cash (T money) card, etc., a terminal to which a separate card reader is attached, or a terminal capable of transmitting data in a wireless manner. In the mobile communication terminal 100, a virtual card payment terminal application (alternatively referred to as a "program" or "firmware") has been previously installed or is downloaded and installed according to the present invention, and self-card payment is performed based on the virtual card payment terminal application.

In accordance with a first embodiment of the present invention (in the case of an affiliated offline store), the affiliated store terminal unit 2 may be implemented as a card payment terminal 200 (alternatively referred to as an "affiliated store card payment terminal") or a card payment terminal and an affiliated store computer terminal 290. In accordance with a second embodiment of the present invention (in the case of an affiliated online store), the affiliated store computer terminal 290 of the affiliated store terminal unit 2 may be a web server, and the card payment terminal 200 may be a payment module that is provided by a PG company and includes a self-payment means according to the present invention. In accordance with the first embodiment, the card payment terminal 200 may be a typical card payment terminal, as shown in FIG. 1, or a Point of Sale (POS) terminal. In the card payment terminal 200, a virtual card payment affiliated store application (or firmware) according to the present invention must be installed, or must be downloaded and installed. When the card payment terminal 200 is a POS terminal, the virtual card payment affiliated store application may be directly downloaded and installed, but when the card payment terminal 200 is a typical card payment terminal, the virtual card payment affiliated store application may be installed via the affiliated store computer terminal 290. In this case, the affiliated store computer terminal 290 must download an application (firmware) installation program provided by the manufacturer of the card payment terminal, together with the virtual card payment affiliated store application. The affiliated store computer terminal 290 is connected to the card payment terminal 200 through a Universal Serial Bus (USB) or an RS232C cable, and the virtual card payment affiliated store application is installed in the card payment terminal 200 by running the application installation program.

The virtual affiliated store management server unit 300 allows each user who will use the mobile communication terminal 100 as a virtual card payment terminal to register as a member, manages the members, allows affiliated stores to register as members, and manages the member stores, and also manages unique card payment terminal numbers for the card payment terminals 200 of the affiliated stores. When a self-payment request to perform payment using the mobile communication terminal 100 of a certain mobile communication terminal user as a virtual card payment terminal is received from the card payment terminal 200 in any affiliated store, the virtual affiliated store management server unit 300 generates virtual card terminal identification information corresponding to the unique card payment terminal number of the affiliated store, allocates it to the mobile communication terminal 100, and receives card payment information from the mobile communication terminal 100 only a first time for the virtual card terminal identification information, and processes payment for the affiliated store. The virtual affiliated store management server unit 300 may also be configured to assign an identification information band of the virtual card terminal falling within a predefined range to each affiliated store, that is, a single unique card payment terminal number, and to randomly generate identification information within the assigned virtual card terminal identification information range when the card payment terminal 200 requests self-card payment, and to allocate the generated identification information to the corresponding mobile communication terminal 100.

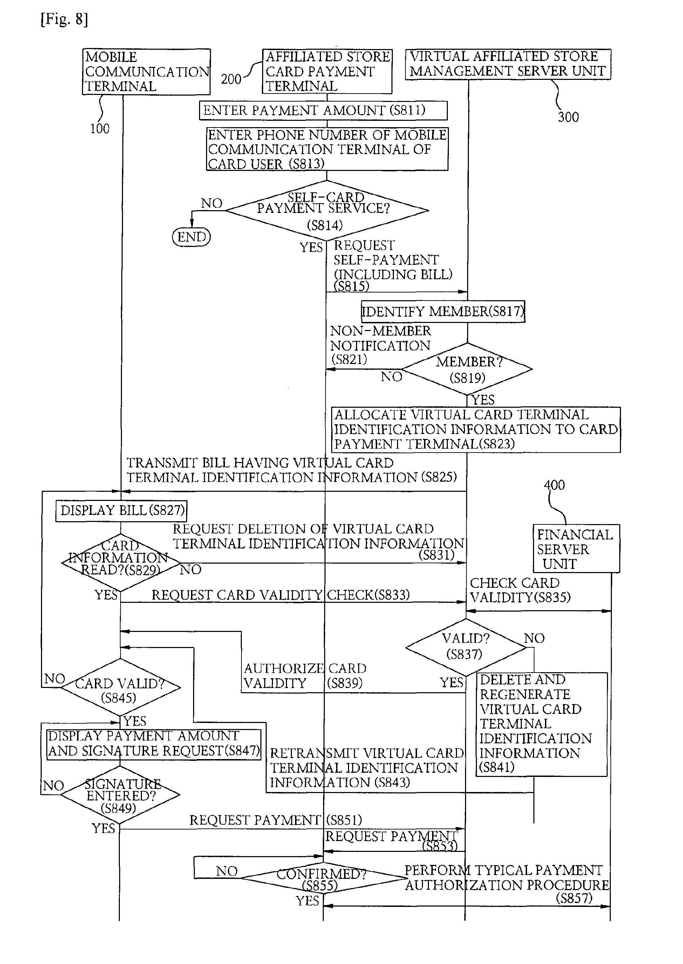

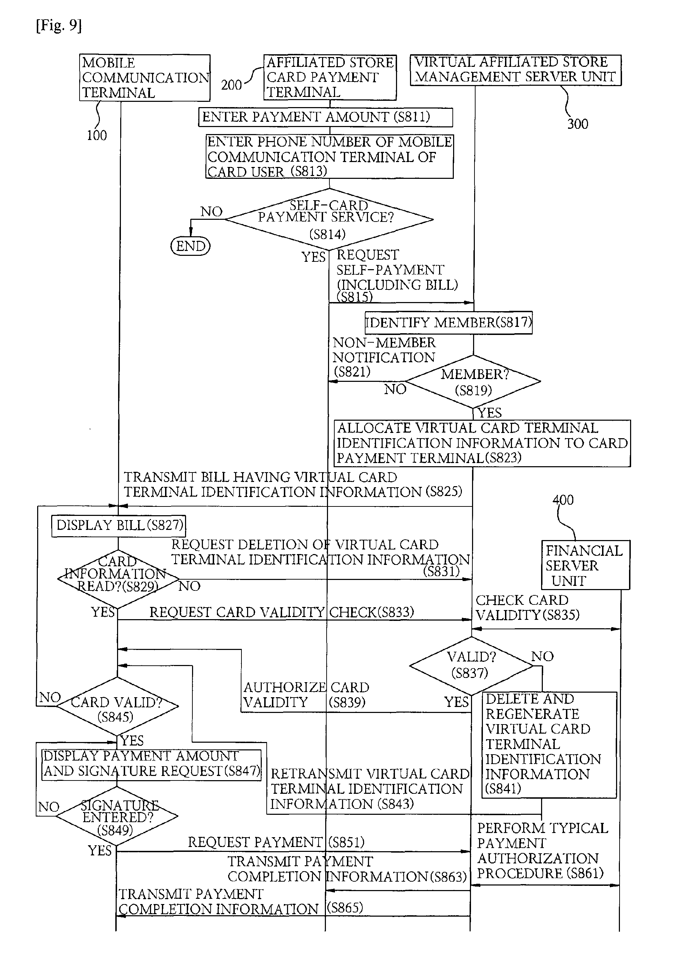

An agent that performs payment via a VAN company server 410 or a PG company server 420 may be the card payment terminal 200 of an affiliated store or the virtual affiliated store management server unit 300 according to the embodiment of the present invention. A detailed description thereof will be made with reference to FIGS. 8 and 9.

A financial server 430 is the server of the financial company that ultimately authorizes the payment, such as a card company server or a bank server.

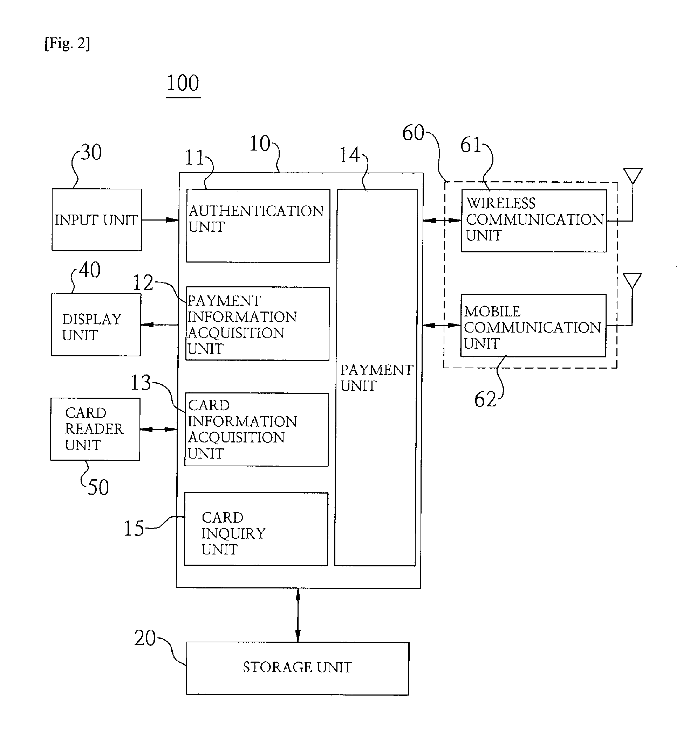

FIG. 2 is a diagram showing the configuration of the card payment terminal of the self-card payment system using a mobile communication terminal according to the present invention. The configuration and operation of the mobile communication terminal according to the present invention will be described with reference to FIG. 2.

The mobile communication terminal 100 according to the present invention includes a control unit 10, a storage unit 20, an input unit 30, a display unit 40, a card reader unit 50, and a communication unit 60.

The control unit 10 controls the overall operation of the present invention. In particular, the control unit 10 controls the overall operation related to self-payment performed via a mobile communication terminal set as a virtual card payment terminal according to the present invention. The configuration of the control unit 10 according to the present invention is generated by an installed virtual card payment application, and will be described in detail later after the description of other components.

The storage unit 20 includes a program area in which an operating program for controlling the operation of the mobile communication terminal 100 and a virtual card payment application according to the present invention are installed, a temporary storage area in which data generated during the execution of the program is temporarily stored, and a data area in which data generated by the user and user data generated during the execution of the program are stored. In the data area, transaction record data or the like according to the present invention may be stored. Further, the storage unit 20 may include a storage area in which the identification information of the virtual card terminal, allocated by the virtual affiliated store management server unit 300 or the affiliated store terminal unit 2, is stored.

The input unit 30 includes a plurality of keys such as a power key, a volume key, and a home key, and outputs key signals corresponding to the clicked keys to the control unit 10.

The display unit 40, which is a touch screen, displays the operating status and the graphical user interface of the mobile communication terminal 100 in such a way as to display the graphical user interface corresponding to the virtual card payment application executed according to the present invention, along with a user interface, text, graphics, a still image, a moving image, etc. corresponding to the functions selected via the user interface. The display unit 40 provides coordinate data about the location of the point touched by the user to the control unit 10.

The card reader unit 50 reads card information from the Radio Frequency Identification (RFID) chip of a card that is in contact with or is located in proximity to the card reader unit, and outputs the card information to the control unit 10. The card reader unit 50 may be an NFC unit integrated into the mobile communication terminal 100, or may be connected to the mobile communication terminal 100 as an external device.

The communication unit 60 includes a wireless communication unit 61 for accessing the wired/wireless Internet 151 of the wired/wireless data communication network 150 and performing data communication with the virtual affiliated store management server unit 300 connected to the wired/wireless Internet 151, and is configured to access the mobile communication network 152 of the wired/wireless data communication network 150 and perform data communication with the virtual affiliated store management server unit 300 connected to the mobile communication network 152 over the wired/wireless Internet 151.

Describing the configuration of the control unit 10 in detail, the control unit 10 of the present invention includes an authentication unit 11, a payment information acquisition unit 12, a card information acquisition unit 13, and a payment unit 14, and may further include a card inquiry unit 15.

After the virtual card payment application has been installed, the authentication unit 11 receives an ID and a password from the user of the mobile communication terminal, encrypts and stores the ID and the password in the data area of the storage unit 20 or in the virtual affiliated store management server unit 300, requests an ID and a password from the user upon installing the virtual card payment application, compares the ID and the password received in response to the request with the previously stored ID and password, and then determines whether the current user is the authorized user of the mobile communication terminal 100 to authenticate the user.

When a bill is received through the communication unit 60 after the virtual card payment application has been executed, the payment information acquisition unit 12 displays the bill on the screen of the graphical user interface based on the execution of the virtual card payment application, detects payment information, which includes affiliated store information, payment amount information, etc., and the identification information of the virtual card terminal, and outputs the detected information to the payment unit 14.

After the payment information and the virtual card terminal identification information have been acquired, the card information acquisition unit 13 displays a message requesting the movement of the card in proximity to the card reader unit 50 on the display unit 40. Thereafter, if the card touches or is in proximity to the card reader unit 50, the card information acquisition unit 13 acquires card information from the card through the card reader unit 50, and outputs the card information to the payment unit 14.

The payment unit 14 generates payment request information by combing the payment information and the virtual card terminal identification information, acquired by the payment information acquisition unit 12, with the card information, acquired by the card information acquisition unit 13, and transmits the payment request information to the virtual affiliated store management server unit 300 to request payment. Further, the payment unit 14 may receive the results of processing the payment request from the virtual affiliated store management server unit 300 and display the payment request processing results. However, the results of processing the payment request may be received from the financial server 430 of the corresponding financial company, the VAN company server 410, or the PG company server 420 in the form of a Short Message Service (SMS) message and may then be displayed, similar to a typical card payment system.

The card inquiry unit 15 inquires of the virtual affiliated store management server unit about the card corresponding to the card information upon acquiring the card information through the card information acquisition unit 13. In this case, if there is no abnormality in the inquiry results about the card via the card inquiry unit, the payment unit 14 generates a payment request signal and transmits the payment request signal to the virtual affiliated store management server unit.

The control unit 10 may further include a personal member registration module (not shown) for providing an information input means that allows the user to access the virtual affiliated store management server unit 300 and register as a personal member and for providing the input personal member information, that is, user information, to the virtual affiliated store management server unit 300 so as to use the self-card payment service.

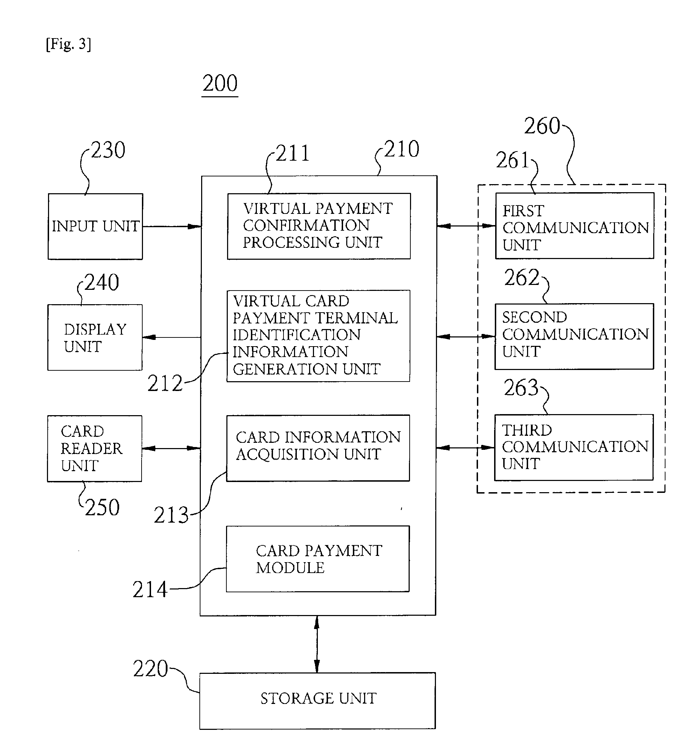

FIG. 3 is a diagram showing the configuration of the card payment terminal of the self-card payment system using a mobile communication terminal according to a first embodiment of the present invention, and shows a configuration in which the card payment terminal 200 of the affiliated store terminal unit 2 is assigned a predetermined range of virtual card payment terminal identification information from the virtual affiliated store management server unit 300, and in which virtual card payment terminal identification information, randomly generated within the assigned range of virtual card payment terminal identification information, is allocated to a certain mobile communication terminal 100.

The card payment terminal 200 according to the first embodiment of the present invention includes a control unit 210, a storage unit 220, an input unit 230, a display unit 240, a card reader unit 250, and a communication unit 260.

The control unit 210 controls the overall operation of the card payment terminal 200 according to the first embodiment of the present invention. In particular, the control unit 210 allocates virtual card terminal identification information corresponding to any self-payment request to the mobile communication terminal 100 of a client who requests self-payment, and controls an operation for performing card payment based on the payment information received from the mobile communication terminal 100.

The storage unit 220 includes a program storage area in which a control program for controlling the operation of the card payment terminal according to the present invention is stored, a temporary area in which data generated during the execution of the program is temporarily stored, and a data area in which data, such as the allocated virtual card terminal identification information, is stored. The control program may take the form of firmware or an application executed in a specific operating system.

The input unit 230 has a plurality of keys, such as number keys and function keys, and outputs key signals corresponding to clicked keys to the control unit 210.

The display unit 240, which may be a text display or a graphic display, displays numbers corresponding to the number keys clicked by the input unit 230 and outputs various types of information related to payment. When the card payment terminal 200 of the present invention is a POS terminal, the display unit 240 may be a graphical display.

The card reader unit 250 reads card information from the magnetic or IC chip of a card, and outputs the card information to the control unit 210.

The communication unit 260 includes a first communication unit 261 connected to a typical PSTN and configured to perform communication with the VAN company server 410 or perform data communication with the virtual affiliated store management server unit 300 over the wired/wireless Internet 151, and a second communication unit 262 directly connected to the affiliated store computer terminal 290 via an RS-232C bus or USB and configured to perform data communication therewith. The communication unit 260 may further include a third communication unit 263 that is an Internet communication unit for directly accessing the wired/wireless Internet 151 and performing data communication with the virtual affiliated store management server unit 300.

The configuration of the control unit 210 is described in detail below. The control unit 210 includes a virtual payment confirmation processing unit 211, a virtual card payment terminal identification information generation unit 212, a card information acquisition unit 213, and a card payment module 214.

The virtual payment confirmation processing unit 211 is configured to, when a self-payment function key is input from the input unit 230, request the entry of the phone number of a certain mobile communication terminal 100 that will perform self-payment via the display unit 240, and request self-payment from the virtual affiliated store management server unit 300 by transmitting a self-payment request signal including the entered phone number and payment amount information to the virtual affiliated store management server unit 300.

The virtual card terminal identification information generation unit 212 randomly generates card terminal identification information within the previously assigned range of virtual card terminal identification information. In accordance with the first embodiment of the present invention, the virtual card terminal identification information is transmitted in the form of being included in the self-payment request signal. However, in a second embodiment of the present invention, the virtual card terminal identification information is generated and allocated by the virtual affiliated store management server unit 300, and thus the card payment terminal 200 is not provided with the virtual card terminal identification information generation unit 212 in the second embodiment.

The card information acquisition unit 213 receives a payment request signal, including card information, from the virtual affiliated store management server unit 300 in response to the transmission of the self-payment request signal, and provides payment information, including the card information and payment amount information, to the card payment module 214.

In the case where an affiliated store is an affiliated offline store, the card payment module 214 is configured to, if the payment information is input from the card information acquisition unit 213, access the VAN company server 410 through the first communication unit 261 and perform card payment according to a typically well-known card payment method. In the case where an affiliated store is an affiliated online store, the card payment module 214 accesses the PG company server 420 through the third communication unit 263, and performs card payment according to a typically well-known online card payment method.

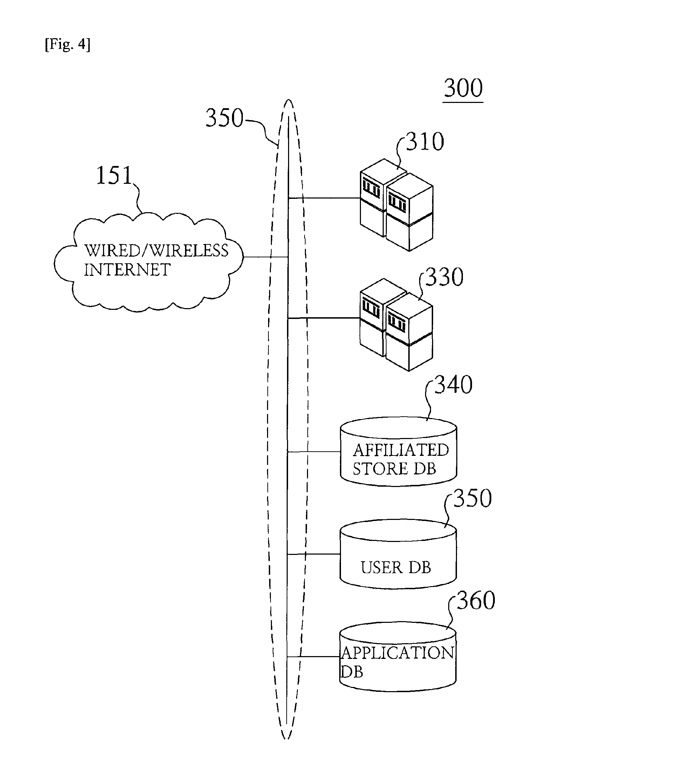

FIG. 4 is a diagram showing the configuration of the virtual affiliated store management server unit of the self-card payment system using a mobile communication terminal according to the present invention.

The virtual affiliated store management server unit 300 according to the present invention includes a user database (DB) 350 for storing user registration information, an affiliated store registration DB 340 for storing affiliated store registration information, a virtual affiliated store management server 310 for controlling the overall operation of self-card payment according to the present invention, and a web server 330 for providing a registration means that allows users and affiliated stores to be registered via a webpage, and for storing the information collected through the registration means in the user DB 350 and the affiliated store registration DB 340.

The affiliated store registration DB 340 includes affiliation document information and authorization information for affiliated stores, stores information about the virtual card payment identification information range assigned to the card payment terminal 200 of the registered affiliated store according to the first embodiment, and also stores one-time card payment identification information assigned to the mobile communication terminal 100 that requests self-payment through the card payment terminal 200 according to the second embodiment. The one-time card payment identification information will be deleted from the mobile communication terminal 100 after one-time payment has been performed. However, the one-time card payment identification information may be configured to be stored in the temporary storage area of the virtual affiliated store management server unit 300 while being mapped to the card payment terminal identification information of the corresponding affiliated store and to then be deleted, without being stored in the affiliated store registration DB 330.

The user DB 350 stores user information about users who desire to use self-payment. The user information includes the name, date of birth, ID and/or password, agreement or disagreement to the terms and conditions of use, mobile communication terminal identification information, etc. of each user. The mobile communication terminal identification information may be the phone number or the like of each mobile communication terminal.

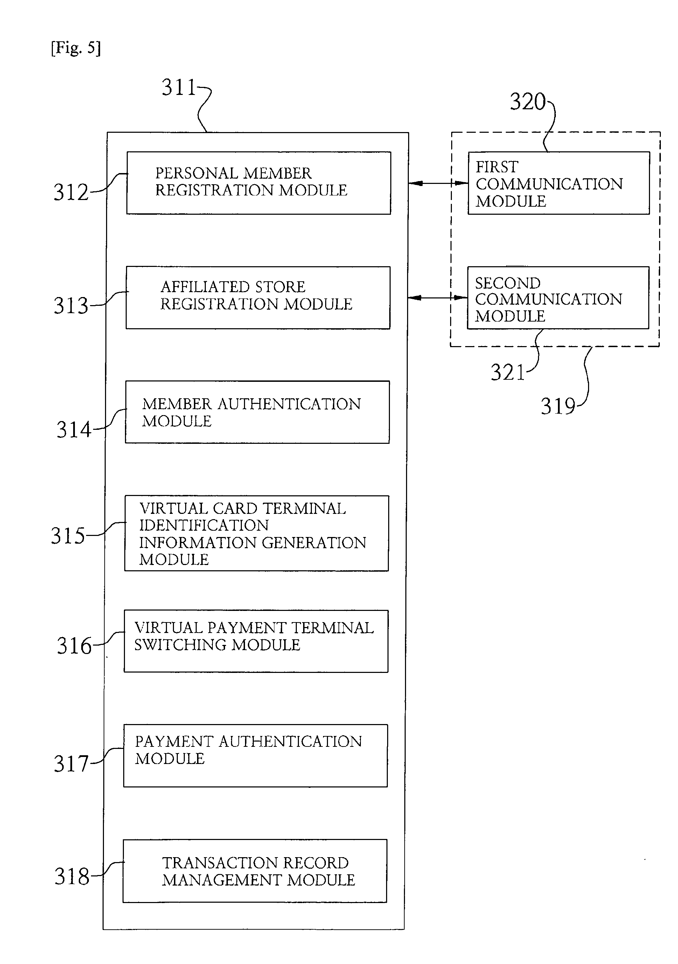

FIG. 5 is a diagram showing the configuration of the virtual affiliated store management server of the affiliated store management server unit according to the present invention. Below, the configuration and operation of the virtual affiliated store management server 310 according to the present invention will be described in detail with reference to the attached drawings.

The virtual affiliated store management server 310 includes a control unit 311 and a communication unit 319.

The communication unit 319 includes a first communication module 320, which is connected to the wired/wireless Internet 151 and is configured to perform data communication with devices and systems connected to the wired/wireless Internet 151, and a second communication module 321, which is connected to the PSTN 160 and is configured to perform data communication with the VAN company server 410 and the card payment terminal 200 connected to the PSTN 160.

The control unit 311 includes a personal member registration module 312, an affiliated store registration module 313, a member authentication module 314, a virtual card terminal identification information generation module 315, a virtual payment terminal switching module 316, a payment authentication module 317, and a transaction record management module 318.

More specifically, when the web server 330 of FIG. 4 is configured, the personal member registration module 312 and the affiliated store registration module 313 are preferably omitted because the registration of members and affiliated stores is performed via the web server 330. However, when the registration of personal members and affiliated stores is required without the web server 330, those modules may be configured in the virtual affiliated store management server 310. In this case, the virtual affiliated store management server must be configured to register personal members and affiliated stores via the virtual card payment application.

In detail, the personal member registration module 312 is configured to, when the mobile communication terminal 100 requests the execution of the virtual card payment application and member subscription via the virtual card payment application, receive member information, that is, information about the user who desires to use self-card payment, from the mobile communication terminal 100, and store the member information in the user DB 350, thus enabling the registration of a personal member.

Further, the affiliated store registration module 313 is configured to, when the card payment terminal 200 requests the registration of an affiliated store via the virtual card payment application, receive information about the affiliated store via the virtual card payment application and store the received information in the affiliated store DB 340, thus enabling the registration of the affiliated store. Therefore, the card payment terminal 200 of the affiliated store must be a terminal enabling the input/output of information, such as a POS terminal.

The member authentication module 314 is configured to, when an authentication request signal is received from the mobile communication terminal 100, perform member authentication based on the ID and/or password of a user included in the authentication request signal with reference to the user DB 350, and when a self-payment request signal is received from the card payment terminal 200, perform the authentication of an affiliated store based on the card payment terminal identification information included in the self-payment request signal with reference to the affiliated store DB 340.

The virtual card terminal identification information generation module 315 is configured when the virtual affiliated store management server unit 300 allocates virtual card terminal identification information to any mobile communication terminal 100 according to the second embodiment of the present invention. When a self-payment request signal is received from any card payment terminal 200, the virtual card terminal identification information generation module 315 generates virtual card payment terminal identification information, and outputs the generated information to the virtual payment terminal switching module 316. The virtual card payment terminal identification information may be randomly encrypted and generated, may be configured to include specific code indicating that this payment is a payment based on the self-payment service performed by the virtual affiliated store management server unit 300, or may be generated to include the card payment terminal identification information of the card payment terminal 200.

The virtual payment terminal switching module 316 is configured to, when the virtual card terminal identification information is input from the virtual card terminal identification information generation module 316, set the mobile communication terminal 100 having a phone number included in the self-payment request signal to a virtual payment terminal, and transmit a bill including the virtual card terminal identification information to the mobile communication terminal 100.

The payment authentication module 317 is configured to, when card information is received from the mobile communication terminal 100 in response to the transmission of the bill, access the server corresponding to the card information, which is one of the VAN company server 410, the PG company server 420, and the financial server 430, check the validity of the card, and transmit a payment request signal, which includes the card information and the payment amount information, to the card payment terminal 200 if there is no abnormality in the card validity.

The transaction record management module 318 stores payment information based on the processing of payment authentication performed by the payment authentication module 317 while mapping the payment information to the information of the affiliated store that transmitted the payment information in the affiliated store DB 340, and thereafter manages the payment information. The transaction record management module 318 may be configured to receive a transaction record based on the completion of final card payment from the card payment terminal 200, store the transaction record while mapping the transaction record to the corresponding affiliated store information in the affiliated store DB 340, and thereafter manage the transaction record.

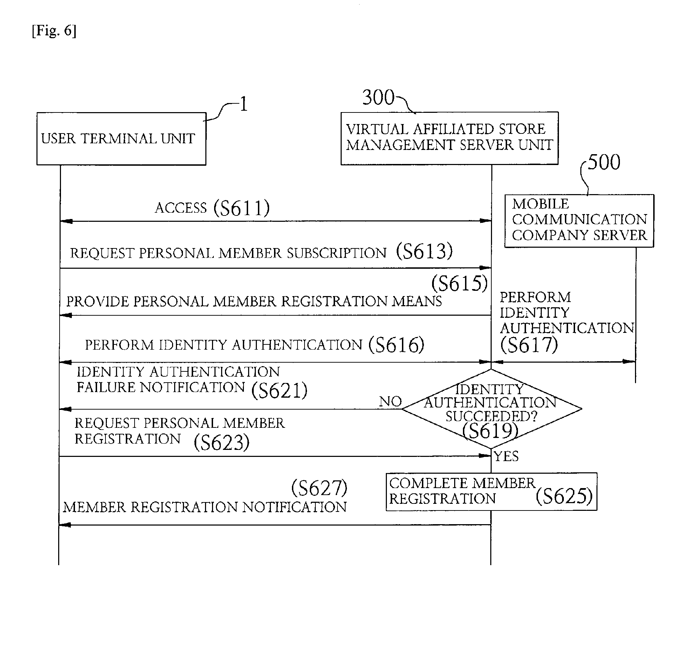

FIG. 6 is a flowchart showing a method for allowing a user to register as a member for self-card payment using a mobile communication terminal according to the present invention.

First, personal member registration methods for using a self-card payment service according to the present invention include a web registration method using a mobile communication terminal, which accesses the web server 230 via the mobile communication terminal 100 for member registration; a web registration method using a computer, which accesses the web server 230 via the user computer terminal 110 for member registration; and an application registration method in which the virtual affiliated store management server 310 of the virtual affiliated store management server unit 300 is accessed via the mobile communication terminal 100 for member registration via the virtual card payment application installed on the mobile communication terminal 100. Further, such a member registration method may include an application installation procedure and a member registration procedure.

Since the application installation procedure is identical to that of a conventional mobile communication terminal, a detailed description thereof will be omitted.

When a member registration procedure is described, the user accesses the virtual affiliated store management server unit 300 via the user terminal unit 1 (S611). When the virtual affiliated store management server unit 300 is accessed, it may provide a webpage, which includes various types of information related to the self-payment service of the present invention and menus for affiliated store registration and personal member registration, to the user terminal unit 1, or may activate the virtual card payment application installed in the mobile communication terminal 100.

When the user requests personal member subscription (registration) via the webpage or the activated virtual card payment application, the user terminal unit 1 transmits a personal member subscription request signal to the virtual affiliated store management server unit 300 (S613).

Then, the virtual affiliated store management server unit 300 provides a webpage including a personal member registration means having an identity authentication item to the user terminal unit 1, or provides a registration means activation signal required to activate the registration means of the application (S615).

When the identity authentication item is selected and information required for identity authentication is input, the virtual affiliated store management server unit 300 performs identity authentication through the mobile communication company server 500 corresponding to the mobile communication terminal 100 of the user terminal unit 1 (S616 and S617).

When identity authentication is performed, the virtual affiliated store management server unit 300 determines whether identity authentication has succeeded (S619). If the identity authentication has failed, the server unit 300 sends an identity authentication failure notification message to the user terminal unit 1 (S621). In contrast, if the identity authentication has succeeded, when a personal member registration request signal including personal member information input through the personal member registration means is received from the user terminal unit 1, the server unit 300 stores the personal member information in the user DB 340 and then completes the member registration (S625). The notification of completion of member registration is provided to the user terminal unit 1 (S627).

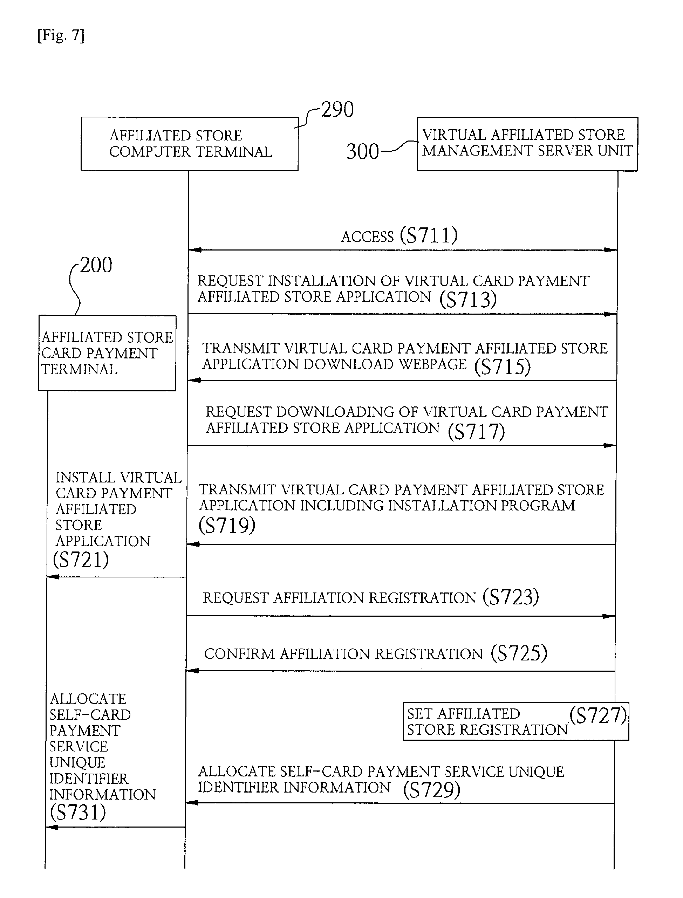

The method for allowing the user to register as a personal member to use the self-card payment service as shown in FIG. 6 has been described. A method for allowing an affiliated store to register as a member as shown in FIG. 7 will be described below.

FIG. 7 is a flowchart showing a method for allowing an affiliated store to register as a member for self-card payment using a mobile communication terminal according to the present invention.

First, an affiliated store manager accesses the web server 330 of the virtual affiliated store management server unit 300 through the affiliated store computer terminal 290 (S711). In this case, the web server 330 may provide a webpage including a menu item enabling a virtual card payment affiliated store application to be installed.

After accessing the web server, if the affiliated store manager selects the menu item enabling the virtual card payment affiliated store application to be installed, the affiliated store computer terminal 290 transmits a virtual card payment affiliated store application installation request signal, which requests the installation of the virtual card payment affiliated store application, to the web server 330 (S713).

Then, the web server 330 of the virtual affiliated store management server unit 300 provides a virtual card payment affiliated store application download webpage, which enables the virtual card payment affiliated store application to be downloaded, to the affiliated store computer terminal 290 (S715).

When the affiliated store manager enters card payment terminal information, including information such as the manufacturer and model name of the card payment terminal 200 used thereby, via the virtual card payment affiliated store application download webpage and then requests the downloading of the virtual card payment affiliated store application, the affiliated store computer terminal 290 transmits a virtual card payment affiliated store application download request signal, which includes card payment terminal information, to the web server 330 of the affiliated store management server unit 300 (S717).

Then, the web server 330 searches the application DB 360 for the installation program and the virtual card payment affiliated store application corresponding to the card payment terminal information of the card payment terminal 200, and transmits the found installation program and virtual card payment affiliated store application to the affiliated store computer terminal 290 (S719).

Then, the affiliated store computer terminal 290 receives the installation program and the virtual card payment affiliated store application, installs and/or executes the installation program, and thereafter upgrades the card payment terminal 200 with the card payment affiliated store application via the installation program (S721). Here, the card payment affiliated store application may be firmware.

After the installation of the virtual card payment affiliated store application, the affiliated store manager clicks an affiliated store registration menu on the webpage provided by the web server 330 of the virtual affiliated store management server unit 300 through the affiliated store computer terminal 290, and transmits an affiliated store registration request signal to the web server 330 (S723). In this case, the affiliated store registration request signal includes affiliated store information, which includes the name, phone number, and card payment terminal identification information of the corresponding affiliated store, along with normal card affiliation documents. In this regard, the affiliated store must first have been authorized by all respective financial institutions, such as card companies and banks related to card payment.

Then, the web server 330 of the virtual affiliated store management server unit 300 stores and registers the affiliated store information and affiliation documents in the affiliated store DB 330 (5725), and thereafter allocates a unique identifier code for the self-card payment service of the affiliated store to the affiliated store card terminal 200, either through the affiliated store computer terminal 290 or directly (S729). The unique identifier code indicates that the corresponding payment is based on a self-card payment service, and may be attached to card payment terminal identification information. For example, when the card payment terminal identification information is 000-0000-0000, the unique identifier code XXX is attached thereto, and then resulting card payment terminal identification information may be 000-0000-0000-XXX.

FIG. 8 is a flowchart showing a first embodiment of a self-card payment method using a mobile communication terminal according to the present invention. Hereinafter, the self-card payment method according to the present invention will be described with reference to FIG. 8.

First, when a user who has subscribed to a self-card payment service according to the present invention and is purchasing goods, such as food or a product, requests self-payment from an affiliated store, an affiliated store manager, that is, a store owner, may enter a payment amount by clicking the key of the input unit 230 of the affiliated store card payment terminal 200 (S811), enter the phone number of the mobile communication terminal 100 of the card user (S813), and then input a self-payment menu key (S814).

After the self-card payment menu key has been input, the affiliated store card payment terminal 200 transmits a self-payment request signal, which includes card payment terminal identification information having the entered payment amount, the phone number of the mobile communication terminal 100, and the unique self-card payment service identifier information of the affiliated store card payment terminal 200, to the virtual affiliated store management server 310 of the virtual affiliated store management server unit 300 (S815).

The virtual affiliated store management server 310 determines, via the user DB 350, whether the mobile communication terminal 100 is owned by a member that has subscribed to the self-card payment service, based on the phone number included in the self-payment request signal (S817). If it is determined that the mobile communication terminal 100 is not owned by a member, the virtual affiliated store management server 310 transmits a non-member notification signal, which indicates that the user of the mobile communication terminal 100 corresponding to the phone number is not a member, to the card payment terminal 200 (S821), whereas if it is determined that the mobile communication terminal 100 is owned by a member, the virtual affiliated store management server 310 generates virtual card terminal identification information for the card payment terminal 200 and allocates it to the mobile communication terminal 100 (S823).

After the allocation of the virtual card terminal identification information, the virtual affiliated store management server 310 transmits a bill including the virtual card terminal identification information to the mobile communication terminal 100 over the wired/wireless data communication network 150 (S825).

When the bill is received from the virtual affiliated store management server 310, the mobile communication terminal 100 detects and stores the virtual card terminal identification information, and displays the bill and a message requesting the touching of the card on the display unit 40 (S827).

After the bill has been displayed, the mobile communication terminal 100 checks whether card information has been read via the card reader unit 50 (S829). If card information is not read within a predetermined period of time, the mobile communication terminal 100 deletes the stored virtual card terminal identification information, and transmits a virtual card terminal identification information deletion request signal to the virtual affiliated store management server 310 (S831). The virtual affiliated store management server 310 that receives the virtual card terminal identification information deletion request signal may delete the virtual card terminal identification information allocated to the mobile communication terminal 100.

In contrast, if it is determined that the card information has been read, the mobile communication terminal 100 transmits a card validity check request signal including the read card information to the virtual affiliated store management server 310 (S833).

The virtual affiliated store management server 310 that receives the card validity check request accesses the corresponding financial company server of the financial server unit 400 corresponding to the card information, checks the validity of the card (S835), and then determines whether the card is valid (S837).

As a result of the card validity check, if the card is determined to be invalid, the virtual affiliated store management server 310 deletes the virtual card terminal identification information, regenerates virtual card terminal identification information (S841), and transmits it to the mobile communication terminal 100 (S843), whereas if there is no abnormality in the validity of the card, the virtual affiliated store management server 310 transmits a card validity authorization signal to the mobile communication terminal 100 (S839).

After the card validity check request has been transmitted, the validity of the card is checked and then virtual card terminal identification information is received again from the virtual affiliated store management server 310, the mobile communication terminal 100 determines that the card is invalid, displays a card abnormality message, and re-displays the bill and a message requesting the touching of the card to cause the card information to be read again (S827).

However, when the card validity authorization information is received, the mobile communication terminal 100 displays a payment amount and a signature request screen (S847), checks whether a signature has been entered (S849), and if the signature has been entered, transmits a payment request signal, which includes a bill and the virtual card terminal identification information, to the virtual affiliated store management server 310, wherein the bill contains the signature and the payment amount information (S851).

The virtual affiliated store management server unit 300 that receives the payment request signal transmits the payment request signal to the affiliated store card payment terminal 200, to which the virtual card terminal identification information is allocated, according to a third embodiment of the present invention (S853).

The affiliated store card payment terminal 200 that receives the payment request signal performs a typical payment authorization procedure based on its own card payment terminal identification information and then processes payment (S857), either when a confirmation command is input from the input unit 230 (S855) or at the moment at which the payment request signal is received.

When the payment based on the payment authorization procedure has been completed, the affiliated store card payment terminal 200 may receive a transaction record from the corresponding financial company of the financial server unit 400 and print it. In this case, the affiliated store card payment terminal 200 according to the present invention may be configured to provide transaction record data to the virtual affiliated store management server unit 300. Further, the virtual affiliated store management server unit 300 that receives the transaction record data may be configured to transmit the transaction record data to the mobile communication terminal 100 through the virtual card payment application.

FIG. 9 is a flowchart showing a second embodiment of a self-card payment method using a mobile communication terminal according to the present invention. Unlike the configuration of FIG. 8, in which the affiliated store card payment terminal 200 ultimately authorizes card payment, this configuration shows the case where the final payment request for self-card payment is made by the virtual affiliated store management server unit 300.

In FIG. 9, the same reference numerals are used to designate the same procedures as those of FIG. 8.

In FIG. 9, when a payment request signal is received from the mobile communication terminal 100 (S851), the virtual affiliated store management server unit 300 accesses the financial company server of the financial server unit 400 corresponding to the card information included in the payment request signal, performs a typical payment authorization procedure based on the card terminal identification information of the virtual affiliated store management server unit 300, and then processes payment (S861).

After the authorization of payment has been completed, if transaction record data is received from the financial server unit 400, the virtual affiliated store management server unit 300 transmits payment completion information including the transaction record data to the affiliated store card payment terminal and the mobile communication terminal 100 through the virtual card payment affiliated store application and the virtual card payment application, respectively (S863 and S865).

The mobile communication terminal 100 and the affiliated store card payment terminal 200 that have received the payment completion information may display and show the transaction record data.

Meanwhile, the present invention is not limited to the above-described typical preferable embodiments, and those skilled in the art will appreciate that various modifications, changes, substitutions, or additions are possible, without departing from the gist of the invention. The technical spirit of those modifications, changes, substitutions, or additions may be construed as being included in the present invention if the practice thereof belongs to the scope of the accompanying claims.

### [Description of the Reference Numerals in the Drawings]

1: user terminal unit 2: affiliated store terminal unit
10, 210, 311: control unit 11: authentication unit
12: payment information acquisition unit
13: card information acquisition unit
14: payment unit 20, 220: storage unit
30, 230: input unit 40, 240: display unit
50, 250: card reader unit 60, 260, 319: communication unit
61: wireless communication unit 62: mobile communication unit
100: mobile communication terminal 110: user computer terminal
150: wired/wireless data communication network 160: PSTN
200: card payment terminal 211: virtual payment confirmation processing unit
212: virtual card payment terminal identification information generation unit
213: card information acquisition unit
214: card payment module
261: first communication unit 262: second communication unit
263: third communication unit
290: affiliated store computer terminal
300: virtual affiliated store management server unit
310: virtual affiliated store management server
312: personal member registration module
313: affiliated store registration module 314: member authentication module
315: virtual card terminal identification information generation module
316: virtual payment terminal switching module
317: payment authentication module
318: transaction record management module
320: first communication module
321: second communication module 330: web server
340: affiliated store DB 350: user DB
360: application DB

## Claims

1. A self-card payment system using a mobile communication terminal, comprising:
an affiliated store card payment terminal for receiving mobile communication terminal identification information of a user who will perform card payment, transmitting a self-card payment request signal that requests self-card payment for the mobile communication terminal, with the mobile communication terminal identification information included in the self-card payment request signal, and if a payment request signal is received in response to the self-payment request signal, performing payment via a card payment financial company based on card information included in the payment request signal;
a mobile communication terminal for, when a bill containing virtual card terminal identification information is received, displaying the bill, and thereafter reading the card information from a card and transmitting a payment request signal including the card information and the bill; and
a virtual affiliated store management server unit for, when the self-card payment request signal is received from the affiliated store card payment terminal, transmitting a bill containing the virtual card terminal identification information to the mobile communication terminal corresponding to the mobile communication terminal identification information included in the self-card payment request signal, and for, when the payment request signal is received from the mobile communication terminal, providing the payment request signal to the affiliated store card payment terminal corresponding to the virtual card terminal identification information.

2. The self-card payment system of claim 1, wherein the mobile communication terminal comprises:
a communication unit for accessing a wired/wireless Internet and a mobile communication network and performing data communication with the virtual affiliated store management server unit;
a card reader unit for reading card information from a card located at a predetermined distance and outputting the card information; and
a control unit for, when the bill is received through the communication unit, reading card information of a card to be used for payment through the card reader unit, generating the payment request signal, and transmitting the payment request signal to the virtual affiliated store management server unit through the communication unit.

3. The self-card payment system of claim 2, wherein the control unit comprises:
an authentication unit for, when the bill is received, receiving one or more of an ID and a password from a user, comparing one of the ID and the password with one of a prestored ID and a prestored password corresponding to the one of the received ID and password, and checking whether they are identical to each other;
a payment information acquisition unit for, when authentication by the authentication unit succeeds, receiving the bill, and detecting and displaying payment amount information and affiliated store information contained in the bill;
a card information acquisition unit for, after the bill is displayed, requesting movement of the card to be used for payment for the bill in proximity to the card reader unit, and reading and acquiring card information from the proximate card; and
a payment unit for generating a payment request signal including the card information and the bill, and transmitting payment request signal to the virtual affiliated store management server unit.

4. The self-card payment system of claim 3, wherein:
the control unit further comprises a card inquiry unit for inquiring of the virtual affiliated store management server unit about the card corresponding to the card information when the card information is acquired through the card information acquisition unit,
the payment unit is configured to, when there is no abnormality in a result of inquiry by the card inquiry unit, generate the payment request signal and transmit the payment request signal to the virtual affiliated store management server unit.

5. The self-card payment system of claim 1, wherein the affiliated store card payment terminal comprises:
an input unit having a plurality of number keys and a self-card payment function key;
a communication unit for accessing a typical Public Switched Telephone Network (PSTN) to perform data communication with financial company servers and perform data communication with the virtual affiliated store management server unit;
a storage unit for storing a virtual card-payment affiliated store program; and
a control unit for, after the self-card payment function key has been input, receiving mobile communication terminal identification information of the user who will perform card payment in compliance with the virtual card payment affiliated store program, through the input unit, transmitting the self-card payment request signal that requests self-card payment for the mobile communication terminal to the virtual affiliated store management server unit, with the mobile communication terminal identification information included in the self-card payment request signal, and if a payment request signal is received from the virtual affiliated store management server unit in response to the self-payment request signal, performing payment via the card payment financial company based on the card information included in the payment request signal.

6. The self-card payment system of claim 5, wherein:
the affiliated store card payment terminal further comprises a second communication unit connected to an affiliated store computer terminal to perform data communication therewith, and
the virtual card payment affiliated store program is installed after being downloaded from the virtual affiliated store management server unit through the affiliated store computer terminal connected via the second communication unit when the affiliated store is registered as an affiliated store for providing a self-card payment service through the virtual affiliated store management server unit.

7. The self-card payment system of claim 5, wherein the control unit comprises:
a virtual payment confirmation processing unit for, after the self-card payment function key has been input, receiving, through the input unit, mobile communication terminal identification information of the user who will perform card payment in compliance with the virtual card payment affiliated store program, and transmitting the self-card payment request signal that requests self-card payment for the mobile communication terminal to the virtual affiliated store management server unit, with the mobile communication terminal identification information included in the self-card payment request signal;
a card information acquisition unit for receiving the payment request signal through the communication unit and detecting and acquiring the card information included in the payment request signal; and
a card payment module for performing payment through the card payment financial company that authorizes payment with the card corresponding to the acquired card information.

8. The self-card payment system of claim 7, wherein the control unit further comprises a virtual card terminal identification information generation unit for, when an affiliated store for providing a self-card payment service is registered through the virtual affiliated store management server unit, being assigned a virtual card terminal identification information band falling within a predetermined range from the virtual affiliated store management server unit, and for, when a self-card payment request is generated due to clicking of the self-card payment function key, generating any virtual card terminal identification information in the virtual card terminal identification information band,
wherein the virtual payment confirmation processing unit transmits the generated virtual card terminal identification information to the virtual affiliated store management server unit, with the virtual card terminal identification information included in the self-payment request signal.

9. The self-card payment system of claim 1, wherein the virtual affiliated store management server unit comprises:
an affiliated store database (DB) for storing affiliated store information about companies, which provide the self-card payment service and in which authorization of card affiliation has been completed;
a user DB for storing user information including mobile communication terminal identification information of users who desire to use the self-card payment service;
a web server for providing a registration unit for registration of affiliated stores to provide the self-card payment service and personal members via a webpage, storing affiliated store information input through the registration unit in the affiliated store DB to register the corresponding stores as affiliated stores, and receiving the user information through the registration unit and storing the user information in the user DB to register the corresponding users as personal members; and
a virtual affiliated store management server for, when a self-card payment request signal is received from an affiliated store card payment terminal of an affiliated store registered as a member, transmitting a bill containing virtual card terminal identification information to a mobile communication terminal corresponding to mobile communication terminal identification information included in the self-card payment request signal, with respect to the member subscribed to the self-card payment service, and for, when the payment request signal is received from the mobile communication terminal, providing the payment request signal to the affiliated store card payment terminal corresponding to the virtual card terminal identification information.

10. The self-card payment system of claim 1 or 9, wherein the virtual card terminal identification information is generated by the virtual affiliated store management server unit and is allocated to the mobile communication terminal, the virtual card terminal identification information being managed so that the virtual card terminal identification information is mapped to card terminal identification information of the affiliated store card payment terminal.

11. The self-card management system of claim 1, wherein the virtual card terminal identification information is valid for one-time reading of the card information in the mobile communication terminal, and is then deleted after the one-time reading of the card information.

12. The self-card payment system of claim 9, wherein:
the virtual affiliated store management server unit further comprises an application DB for storing virtual card payment affiliated store programs based on manufacturers of affiliated store card payment terminals and device types, and
the web server is configured to, when affiliated store members to provide the self-card payment service are registered, receive information about manufacturers and device types of affiliated store card payment terminals, provide installation programs and virtual card payment programs corresponding to the manufacturers and device types to corresponding affiliated store computer terminals, install the corresponding installation programs in the affiliated store computer terminals, and install the corresponding virtual card payment programs in the affiliated store card payment terminals via the installation programs.

13. A self-card payment method using a mobile communication terminal, comprising:
a self-card payment request procedure of, when a self-card payment service is requested as input of mobile communication terminal identification information, transmitting, by an affiliated store card payment terminal, a self-card payment request signal including the mobile communication terminal identification information and payment amount information to a virtual affiliated store management server unit, and then requesting self-card payment for the mobile communication terminal;
a card payment request procedure of, when the self-card payment request signal is received from the affiliated store card payment terminal, transmitting, by the virtual affiliated store management server unit, a bill containing virtual card terminal identification information to a mobile communication terminal corresponding to the mobile communication terminal identification information included in the self-card payment request signal;
a virtual payment request procedure of, after the bill containing the virtual card terminal identification information has been displayed upon receiving the bill, reading, by the mobile communication terminal, card information from a card and transmitting a payment request signal including the card information and the bill;
a payment request procedure of transmitting, by the virtual affiliated store management server unit, the payment request signal to the affiliated store card payment terminal corresponding to the virtual card terminal identification information contained in the bill when the payment request signal is received; and
a payment procedure of performing, by the affiliated store card payment terminal, payment via a card payment financial company based on card information included in the payment request signal when the payment request signal is received.

14. The self-card payment method of claim 13, wherein the self-card payment request procedure comprises:
a virtual card terminal identification information generation step of generating, by the affiliated store card payment terminal, any one piece of virtual card terminal identification information in a virtual card terminal identification information band falling within a predetermined range previously assigned by the virtual affiliated store management server unit for the mobile communication terminal identification information; and
a self-card payment request step of transmitting a self-card payment request signal including a bill to the virtual affiliated store management server unit, wherein the bill has the generated virtual card terminal identification information, the mobile communication terminal identification information, and payment amount information.

15. The self-card payment method of claim 13, wherein the card payment request procedure comprises:
a virtual card terminal identification information allocation step of, when the self-card payment request signal is received, generating and allocating, by the virtual affiliated store management server unit, virtual card terminal identification information to a mobile communication terminal corresponding to the mobile communication terminal identification information included in the self-card payment request signal, and storing the virtual card terminal identification information so that the virtual card terminal identification information is mapped to affiliated store information for the affiliated store card payment terminal; and
a card payment request step of transmitting the bill containing the virtual card terminal identification information to the mobile communication terminal.

16. The self-card payment method of claim 14 or 15, wherein the virtual payment request procedure comprises:
an authentication step of, when the bill is received, receiving one or more of an ID and a password from a user, comparing one of the ID and the password with one of a prestored ID and a prestored password corresponding to the one of the received ID and password, and checking whether they are identical to each other;
a payment information acquisition step of, when authentication succeeds, receiving the bill, and detecting and displaying payment amount information and affiliated store information contained in the bill;
a card information acquisition step of, after the bill has been displayed, detecting and storing virtual card terminal identification information contained in the bill, requesting movement of a card to be used for payment for the bill in proximity to a card reader unit, based on the virtual card terminal identification information, and reading and acquiring card information from the proximate card; and
a virtual payment request step of generating a payment request signal including the card information and the bill, and transmitting the payment request signal to the virtual affiliated store management server unit.

17. The self-card payment method of claim 16, wherein:
the virtual payment request procedure further comprises a card inquiry step of, when the card information is acquired by the card information acquisition unit, inquiring of the virtual affiliated store management server unit about the card corresponding to the card information, and
the virtual payment request procedure is configured such that, when there is no abnormality in a result of inquiry at the virtual payment request step, the payment request signal is transmitted to the virtual affiliated store management server unit.

18. The self-card payment method of claim 16, wherein the virtual payment request procedure further comprises a virtual card terminal identification deletion step of, after the card information acquisition step, deleting the stored virtual card terminal identification information.

19. The self-card payment method of claim 13, further comprising a member registration procedure including an affiliated store registration step of registering affiliated store members to provide the self-card payment service, and a personal member registration step of registering personal members to use the self-card payment service,
wherein the self-card payment request procedure is performed on a mobile communication terminal of a member registered as a personal member in an affiliated store registered as an affiliated store member via the member registration procedure.

20. The self-card payment method of claim 19, wherein the affiliated store registration step comprises:
a program installation step of installing, by the affiliated store card payment terminal, a virtual card payment affiliated store program, after being downloaded from the virtual affiliated store management server unit; and
an affiliated store information input step of accessing a web server of the virtual affiliated store management server unit that provides an affiliated store registration unit through an affiliated store computer terminal, inputting affiliated store information including the affiliated store card payment terminal identification information through the affiliated store registration unit, and then registering the affiliated store.

21. The self-card payment method of claim 20, wherein the program installation step comprises:
an affiliated store card payment terminal information input step of, inputting, by the affiliated store computer terminal, information about a manufacture and a device type of the affiliated store card payment terminal provided by the web server;
a download step of downloading, by the affiliated store computer terminal, an installation program and a virtual card payment affiliated store program corresponding to the affiliated store card payment terminal from the web server;
an installation program installation step of installing, by the affiliated store computer terminal, the installation program;
an affiliated card payment affiliated store program transmission step of transmitting, by the affiliated store computer terminal, the virtual card payment affiliated store program to the affiliated store card payment terminal via the installation program; and
a virtual card payment affiliated store program installation step of installing, by the affiliated store card payment terminal, the virtual card payment affiliated store program downloaded via the installation program.
